# EUROPEAN PATENT APPLICATION

(11) **EP 4 738 236 A1**
(43) Date of publication of application: **06.05.2026**
(21) Application number: 25211442.6
(22) Date of filing: 27.10.2025
(51) Int. Cl.: G06Q 50/40, G06N 3/045

(54) **TAXI TIME RESIDUAL CORRECTIONS**

(30) Priority: 04.11.2024 IN 202411084085; 22.10.2025 US 202519365840
(71) Applicant: ARINC Incorporated, Annapolis, MD 21401 (US)
(72) Inventor: BALACHANDRAN, Vishnu, Kozhikode KL 673029 (IN); XAVIER, Jerrin, Allappuzha KA 560 (IN)
(74) Representative: Dehns

(57) **Abstract**

Systems, devices, methods, and computer-readable media provide improved taxi-time estimates. A method includes receiving, by a graph neural network, GNN (112), features indicating current traffic and current weather conditions at an airport and an estimated taxi-time, the GNN (112) operating on a graph that indicates spatial relationships between elements of the airport, generating, by the GNN (112), graph data including weights that indicate an effect of the features on the taxi-time and a second estimated taxi-time, generating, by a transformer and based on the graph data and the second estimated taxi-time, taxi-time deviations, the taxi-time deviations indicating an amount of time to adjust the estimated taxi-time, and applying, by a taxi-time correction operator, the taxi-time deviations to the estimated taxi-time, resulting in an updated taxi-time.

## Description

### CLAIM OF PRIORITY

This patent application claims the benefit of priority to India Application Serial No. 202411084085, filed November 4, 2024.

### TECHNICAL FIELD

Embodiments regard increasing accuracy of airplane taxi times.

### BACKGROUND

Current taxi times are predicted primarily on historical data. The historical data includes factors like typical taxi times for specific routes, average delays during different times of day, and seasonal trends.

### BRIEF DESCRIPTION OF DRAWINGS

FIG. 1 illustrates, by way of example, a diagram of an embodiment of a system for improved taxi time determination.
FIG. 2 illustrates, by way of example, a diagram of an embodiment of a technique for training the GNN, the transformer, and the taxi-time correction operator.
FIG. 3 illustrates, by way of example, a diagram of an embodiment of a technique for generating the GNN.
FIG. 4 illustrates, by way of example, a diagram of an embodiment of a method for improved taxi time prediction.
FIG. 5 is a block diagram of an example of an environment including a system for neural network (NN) training.
FIG. 6 illustrates, by way of example, a block diagram of an embodiment of a machine in the example form of a computer system within which instructions, for causing the machine to perform any one or more of the methods or techniques discussed herein, may be executed.

### DETAILED DESCRIPTION

The following description and the drawings sufficiently illustrate teachings to enable those skilled in the art to practice them. Other embodiments may incorporate structural, logical, electrical, process, and other changes. Portions and features of some examples may be included in, or substituted for, those of other examples. Teachings set forth in the claims encompass all available equivalents of those claims.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

There are drawbacks to determining taxi times based on historical data. The drawbacks include an inability to adapt, a lack of specificity, a failure to account for complex interactions, and adverse impact on airport operations.

Airport conditions are constantly changing. A sudden surge in traffic, a runway closure due to maintenance, or unexpected weather events can affect taxi times. Historical averages based on historical data do not change fast enough to reflect these real-time shifts.

Historical data often treats taxi routes broadly and lack specificity. A flight departing from a far-off gate during peak traffic will take significantly longer to taxi than one from a closer gate during off-peak hours. Such a distinction that gets lost in broad averages provided by historical data.

Taxiing is a complex process influenced by a multitude of factors and historical data fails to account for complex interactions. Taxiing is influenced by aircraft type and size. Larger aircraft may take longer to maneuver on taxiways and the historical data fails to account for this. Taxiing is influenced by route-specific adjustments. Historical data failes to factor in a starting gate location. If a large aircraft starts at a distant gate, the large aircraft effect on taxiing times should be amplified on the predicted route. The historical data fails to account for congestion. Bottlenecks at taxiway intersections or near a busy runway cause delays that affect taxi times. The historical data fails to account for weather. Rain, wind, or low visibility force pilots to taxi more cautiously, increasing taxi time. The historical data also fails to account for unexpected events. Mechanical issues, gate changes, or runway maintenance can all affect taxi times.

The inaccuracy in taxi times adversely affects airport operations. The innacuracy has cascading effects on airport operations. The innacuracy leads to sequencing inefficiencies, suboptimal gate assignments, and disrupted ground handling, among other adverse affects on airport operations. Regarding sequencing inefficiencies, takeoff and landing sequences are often planned around expected taxi times. Wrong estimates of taxi times leads to aircraft waiting unnecessarily on the tarmac or rushing to runways, causing further delays down the line. Regarding suboptimal gate assignments, if taxi times are consistently underestimated, airlines can choose less convenient gates, thinking they are closer to the runway in terms of time. This inefficient gate usage reduces airport capacity. Regarding disrupted ground handling, catering, fueling, and baggage services all need to be timed appropriately. Miscalculated taxi times create a chain reaction that affects ground handling, making it harder to ensure aircraft are serviced, cleaned, and prepared on time for their next flight.

The dynamic nature of airports demands taxi time predictions that are responsive, nuanced, and that factor in a wide range of variables, some of which are constantly changing. Without this, optimizing airport operations becomes difficult, leading to reduced efficiency, higher costs, and the potential for flight delays. To address one or more of the drawbacks, an improved taxi time system includes a hybrid approach. The hybrid taxi time approach can include a graph neural network (GNN), a transformer model, or a combination thereof, that updates taxi time estimates as a powerful enhancement:

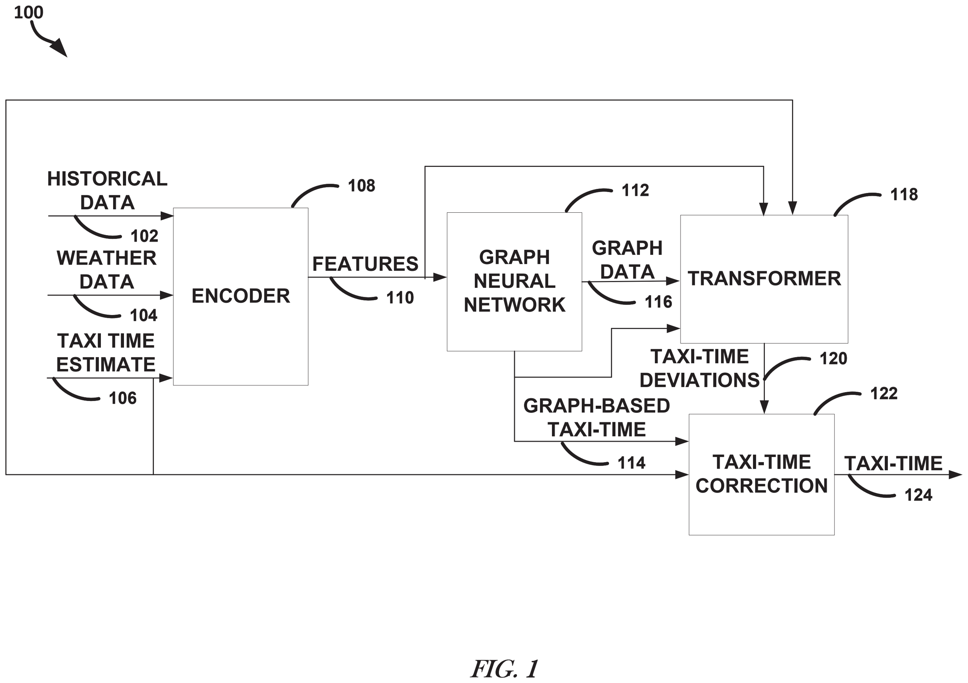

FIG. 1 illustrates, by way of example, a diagram of an embodiment of a system 100 for improved taxi time determination. The system 100 as illustrated includes an encoder 108 coupled to a graph neural network (GNN) 112 and a neural network (NN) transformer 118. The system 100 as illustrated further includes a taxi-time correction operator 122 coupled to the GNN 112 and the transformer 118.

The airport's physical layout is modeled as a graph on which the GNN 112 operates. Gates, runways, taxiways, and potential congestion zones are nodes within the graph. Taxiways form the edges between nodes. Weights associated with the edges can be determined based on distance, typical travel time, and dynamic congestion levels. This graph structure innately captures the spatial constraints of taxiing. A message passing of the GNN 112, where nodes "communicate" with each other about traffic conditions, can be enhanced using a transformer 118. Attention mechanisms allow the GNN to selectively focus on the most relevant neighbors at any given moment based on airport conditions. A multi-head attention adds another layer of sophistication, enabling the model to learn diverse ways that taxi dynamics are interrelated.

The transformer 118 takes, as input, features 110, such as: aircraft details, gate positions, weather, and real-time congestion data. The transformer 118 learns how the features interact with each other and with the overall airport state. This means the transformer 118 might focus on congestion during peak times, but shift to weather-related factors during storms.

To fine-tune taxi time predictions, a post-processing system can analyze an initial taxi time prediction and pinpoint any discrepancies - known as residuals. Another model, potentially with transformer-based attention mechanisms, can learn to identify patterns that cause these inaccuracies. This allows the model to calculate correction factors that are then applied to the original predictions. This two-step approach ensures that taxi time estimates dynamically adapt to real-time airport conditions. The second model that adjusts the initial taxi time prediction increases accuracy of the taxi time prediction by drawing on both broader data sources and a deeper understanding of the factors affecting the taxi time.

The hybrid approach of the system 100 is so effective because it leverages the complementary strengths of GNNs and transformers. GNNs inherently understand the physical layout of the airport. The GNN can pinpoint how taxiways, gates, and runways relate to each other, which is crucial for calculating taxiing distances and potential bottlenecks. Transformers excel at finding hidden patterns within large datasets. They can analyze how factors like aircraft type, weather, and congestion interact in ways that are not immediately obvious, leading to far more nuanced taxi time predictions. Together, this system provides a holistic view of the airport environment - both the spatial constraints and the ever-shifting forces that shape taxi times in real-time.

The encoder 108 receives historical data 102, weather data 104, and a taxi time estimate 106 as input. The encoder 108 converts the received data to features 110. The features 110 represent the input in a form that is operable by the GNN 112 and the transformer 118. The features 110 each have a fixed length, while the input has a variable length. The features 110 are a compressed version of the input data. Since the input data is binary, categorical, or numeric, and the NNs only operate on numeric data, the input data is converted to features 110, which are numeric. Example encoding techniques include one-hot encoding, label encodings, binary encodings, or the like.

The historical data 102 captures real-time and historical aviation data. The historical data 102 includes stand/gate positions, aircraft types, traffic flow rates, aircraft specifications, gate assignments, schedules of airplanes, foodservice trucks, fuel trucks, airport personnel (e.g., pilots, stewards/stewardesses, gate agents, baggage handlers, etc.), and real-time positional data of corresponding components (e.g., airplanes, service trucks, airport personnel, etc.). The historical data 102 offers a granular view of airport operations.

The weather data 104 includes wind speed and direction, temperature extremes, current temperature, precipitation, visibility, storm state, or the like. The weather data 104 offers a granular view of the environment within which the components are operating.

With advanced predictive models like the GNN 112 and the transformer 118, it becomes feasible to account for the dynamic constraints inherent in airport ground operations. Specifically, the incorporation of a transformer-based model with the spatial awareness provided by the GNN 112, which are renowned for there proficiency in processing sequential data and uncovering intricate relationships within, enables the computation and subsequent correction of residual errors in taxi time estimates.

By integrating the historical data 102 data with advanced predictive models, such as those utilizing transformer-based attention mechanisms, it is possible to discern complex patterns and interactions among these data. Since weather conditions have a profound impact on various aspects of airport ground operations, influencing taxi times in several ways, the weather data 104 helps better predict the taxi time. High winds, especially crosswinds, can affect the speed at which aircraft taxi on runways and taxiways. Strong winds may require pilots to taxi more slowly for safety, leading to longer taxi times. Additionally, wind direction can influence runway selection, potentially increasing taxi distances if aircraft need to use a runway farther from their gate. Extreme temperatures, both high and low, can impact aircraft performance and the condition of airport surfaces. For instance, in very cold conditions, the need for deicing procedures can add significant time to the taxi process. High temperatures might affect engine performance and cooling systems, potentially requiring operational adjustments that impact taxi times. Rain, snow, and other forms of precipitation can reduce visibility and make taxiways slippery, necessitating slower taxi speeds. Snow and ice may also require additional time for clearing operations, further impacting taxi times. Fog and low clouds can significantly reduce visibility, leading to more cautious taxi speeds and increased spacing between aircraft, both of which can extend taxi times. Thunderstorms pose multiple challenges, including gusty winds, lightning, and heavy rain, all of which can disrupt ground operations and lead to rerouting of taxi paths or temporary halts in taxiing, increasing overall taxi times.

The GNN 112 is generated to provide spatial relationships between components of the airport, such as airplanes, taxiways, gates, and other physical aspects and objects of the airport. GNNs, in general, are good at capturing spatial relationships between objects. Using the GNN 112, an airport is represented by graphs. GNNs excel at working with this type of data. The GNN 112 can include gates, runways, and taxiway intersections as nodes. Edges between the nodes represent taxiways, walkways, or other physical connection between the nodes. Each of the edges can be assocaited with a weight. The weight can reflect a distance, congestion tendency, typical travel time, or a combination thereof. This graph representation directly mirrors how taxiing works in the real world. The GNN 112 captures more than just raw data points as it provides a spatial understanding between entities (nodes) of the graphs.

The GNN 112 learns from historical taxi patterns on the graphs. This goes far beyond simple averages used in historical determinations of the taxi time. The GNN 112 pinpoints bottlenecks by identifying nodes prone to delays. The GNN 112 determines this understanding based on more than just distance and identifies the specific locations where slowdowns occur. The GNN 1112 can determine time-dependent weights that reflect corresponding time-dependent patterns. For example, the GNN 112 can learn that congestion on a specific route gets worse during certain times of day, or that certain taxiways are slow regardless of the time.

While the core airport graph structure remains relatively static, edge weights can be dynamically adjusted by the GNN 112 depending on the input data. The GNN 112 can reflect live congestion conditions. Sensor data (e.g., camera data) or queue lengths (e.g., airplane, fuel truck, de-icing truck, service truck, or the like) can increase the weight of an edge representing a congested taxiway, making the GNN 112 provide a different taxiway when calculating routes. The flexibility of the GNN 112 in providing different routes does not require rebuilding the entire graph model. The GNN 112 learns to work with the changing congestion states of different routes. When the GNN analyzes a taxi route, it has a deep understanding of the airport's layout, typical travel times, and where delays are likely to occur, as well as real-time data.

The transformer 118 finds complex patterns between the components of the airport that govern taxi times. Unlike the prior taxi time models that typically rely on simple taxi time averages, the transformer 118 analyzes a vast array of factors: aircraft size, weather, congestion, even unexpected events. A self-attention mechanism in the transformer 118 allows the transformer 118 to learn how the airport components interact, not just in isolation, but together. The transformer 118 can learn, for example, that a large plane during rush hour is far worse than either factor alone, and it can even uncover less obvious patterns, like how a specific aircraft type might subtly influence taxi times.

To achieve superior accuracy, the system 100 starts with an initial taxi time estimate 106. Then, the transformer 118 steps in. The transformer 118 zeroes in on real-time conditions that older models often miss, such as gate changes, tarmac congestion, and more. By pinpointing these hidden influences, the transformer 118 refines the prediction, making it far more responsive to the constantly changing airport environment than prior taxi time determinations.

The combination of the GNN 112 and the transformer 118, with its graph-based representation of the airport, provides a deep understanding of potential taxiing routes, typical travel times, and where congestion 'hotspots' are likely to form. The GNN 112 provides a framework upon which the transformer 118 can contextualize the dynamic factors it analyzes. In turn, the transformer 118 does not simply replace the taxi time estimate 114 from the GNN 112. Instead, the transformer 118 generates a residual (taxi-time deviation 120), which is a precise adjustment factor that reflects its insights about the complex interplay of current conditions. Instead of looking at weather data 104 in isolation, for instance, the transformer 118 can now focus on how the weather data 104 is likely to impact the specific taxi route at hand, based on the knowledge represented by the GNN 112. The GNN 112 provides the map of the airport, and the transformer 118, informed by real-time events and relationships, plots the actual course the taxi time will take, adjusting for traffic, weather, and unforeseen circumstances.

The system 100 starts with the initial taxi time prediction 106. Then, the GNN 112 establishes a baseline expectation, the graph-based taxi-time 114, refined by its understanding of the airport's layout and typical congestion patterns. Next, the transformer 118 analyzes dynamic factors like real-time congestion, weather, aircraft details, and unexpected events, determining how they will impact the GNN 112 graph-based taxi-time 114 and likely cause deviations 120 from the estimate 106, 114. The transformer 118 generates separate sub-residuals representing these deviations 120, along with confidence scores. Finally, these sub-residuals are combined, weighted by both confidence and current airport conditions, resulting in a refined residual, such as by the taxi-time correction operator 122. The taxi-time correction operator 122 then adds the residual to (or subtracts the residual from) the taxi time estimate, resulting in a final taxi-time 124. The taxi-time 124 offers a more accurate and explainable taxi time.

In the system 100, with the GNN 112 and the transformer model 118, feature vectors 110 take on expanded roles compared to traditional language models. Here, feature vectors 110 represent not just words, but a diverse array of operational factors: aircraft type, gate locations (encoded from the GNN 112), congestion levels, weather conditions, and more. This transformation is key for the self-attention mechanism. Instead of solely analyzing language sequences, the transformer 118 identifies how operational factors interact to influence taxi time 124. The transformer 118 constructs attention matrices based on the relationships between features of the features 110, allowing the transformer 118 to dynamically weigh their importance under specific conditions.

Further, unlike language models, the hybrid model that includes the GNN 112 and the transformer 118 does not rely on positional encoding. The GNN 112 inherently handles the spatial relationships between airport elements, and feature order within the dataset matters less than the interplay between features 110 themselves. This allows the models 112, 118 to avoid biases based on input order and focus purely on the complex dependencies that truly dictate the taxi time 124. The result is a system 100 that is adaptable to the dynamic nature of airports and the constantly shifting variables at play.

To optimize taxi time calculations, the encoder 108 can strategically prepare the data for the GNN 112 and transformer 118 models. The encoder 108 determine a categorical encoding for some features. The features like aircraft type and gate locations (derived from the GNN 112 graph structure) are encoded categorically. This helps the transformer 118 understand distinct categories rather than treating them as numerical values.

The encoder 108 can discretize continuous variables. Variables like taxi distance or congestion levels can be segmented into discrete buckets (e.g., short/medium/long taxi distance, low/medium/high congestion). This simplification is not a significant loss of information. The discretization allows the transformer 118 to focus on learning how different buckets interact with each other and with categorical features.

The graph representation works well with discrete nodes and edge weights. Discretization helps align continuous data with this format. By pre-defining discrete ranges, the transformer 118 does not use computational resources trying to find arbitrary divisions within continuous data. Instead, the transformer 118 focuses on the core task - uncovering complex patterns between the features 110.

To achieve increased accuracy, the system 100 can leverage the power of geospatial data from the GNN 112. The GNN 112 models the airport environment as a graph. The graph incorporates precise gate locations and detailed taxiway routes, ensuring the model captures the spatial nuances of taxi operations. Since geospatial data might be unevenly distributed across the airport, a flexible grid system allows for variable resolutions. This lets the model focus on high-traffic areas with greater precision. Techniques like feature hashing can help the transformer 118 component of the system 100 identify important relationships between airport elements. Instead of maintaining a dictionary, a feature vectorizer (e.g., the encoder 108) that uses the hashing trick can build a vector of a pre-defined length by applying a hash function *h* to the features (e.g., words), then using the hash values directly as feature indices and updating the resulting vector at those indices.

The transformer 118 transforms the geospatial information into compact codes without sacrificing the core details the model needs to understand how location factors into taxi time 124. In general, with the spatial knowledge of the GNN 112, The graph structure mirrors the airport environment, with location-specific information embedded into nodes and edges. The transformer 118 analyzes these geospatial codes along with other factors (weather, aircraft type, etc.) to uncover how they interact and determine taxi time deviations 120.

To help ensure fast taxi time predictions essential for real-time airport operations, there are some optimizations that can be performed. While transformers excel in finding complex patterns, their standard self-attention mechanism can introduce computational overhead. Techniques such as linear transformers or other attention approximations can significantly reduce complexity. This allows the model to uncover crucial relationships without slowing down predictions. A typical transformer has a computational complexity of *O*(*N*²). A linear transformer approximates the operations of the typical transformer to *O*(*N*), where *N* is the sequence length.

To help optimize the graph representation, the representation of the airport can be designed for efficiency. The nodes of the graph can focus on core bottlenecks and merge points, limiting an amount of less impactful nodes to a specified threshold number of nodes. The core bottleneck and merge points can include a specified number of nodes that have a most significant impact on the taxi time 124. To help optimize edge weight computations, a delta computation technique can be implemented. Real-time sensor data can be used only when it meaningfully impacts predictions (e.g., when a delta between a prior value and the new value exceeds a specified threshold), reducing unimpactful re-calculations of edge weights.

The embeddings from the encoder 108 can include categorical features that allow for Efficiently embedded for fast lookups by the transformer 118. The geospatial data 116 for the GNN 112 can be discretized and hashed, enabling rapid encoding of location information crucial for the GNN 112.

The architecture of the system 100 can be streamlined with relatively few layers. This, combined with the strategic use of embeddings for representing input features, ensures that each taxi time prediction activates only a small fraction of the total parameters of the model of the system 100. This targeted approach significantly accelerates computations, making the model exceptionally efficient.

The system 100 can be generalized by focusing on shared patterns across airports and by including a modular design for airport-specific adaptations. Regarding shared patterns, the system 100 can be trained on data from multiple airports with varying sizes and layouts. This forces the models of the system 100 to identify the core GNN 112 graph patterns (e.g., bottleneck types, taxiway distances) and transformer relationships (e.g., how congestion impacts different aircraft) that influence taxi times regardless of the specific airport structure. Regarding modular design for airport-specific adaptations: The GNN 112 and transformer 118 central architecture remains the same for different airports. This encodes the fundamental knowledge of how spatial relationships and dynamic factors influence taxi times in general. Further, smaller, supplementary modules can be trained on data from individual airports. These modules fine-tune the predictions, learning the nuances of the layout of each airport and local operational patterns that the core model might not fully capture.

The taxi-time correction operator 122 performs a bias adjustment for refined taxi time 124 predictions. After the GNN 112 and the transformer 118 has analyzed the inputs and computed an initial residual (the taxi-time deviations 120), the taxi-time correction operator 122 applies the residual to the estimate 106. The taxi-time correcion operator 122 can be implemented using a bias adjustment layer. The bias adjustment layer recognizes that different segments of taxi operations may have inherent biases the taxi time 106 fully captures. For example short and long taxi distances might have distinct error patterns. In another example, busy international terminals and smaller domestic gates could exhibit different taxi-time biases. In yet another example, peak hour and off-peak traffic patterns might introduce specific taxi-time biases. During training, the taxi-time correction operator 122 learns to generate adjustment values tailored to these specific biases. These adjustments are then applied to the taxi time 106, leading to a final taxi time 124 that is more accurate.

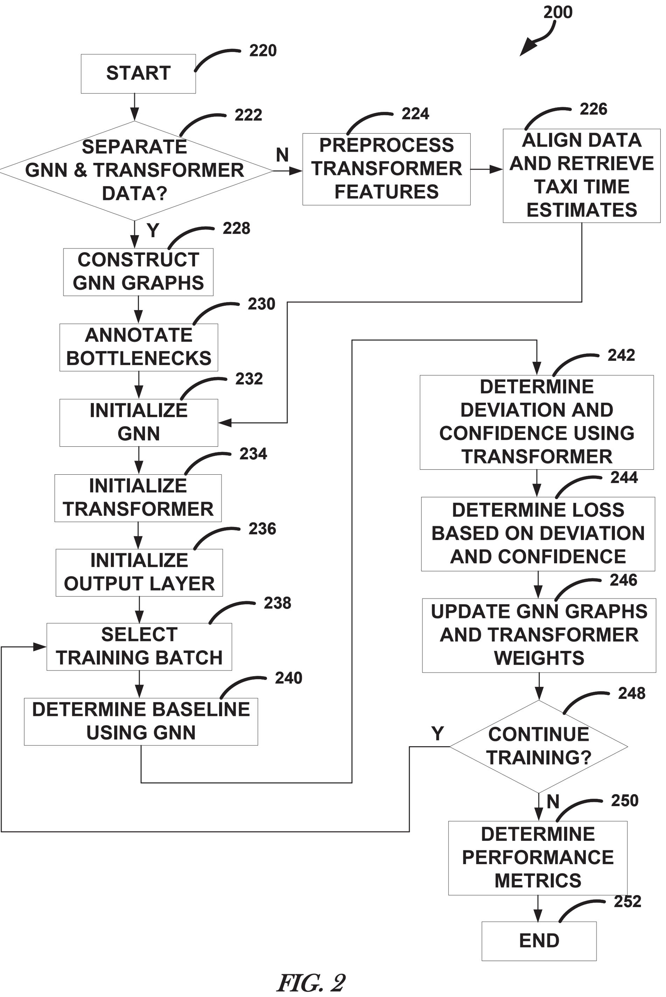

FIG. 2 illustrates, by way of example, a diagram of an embodiment of a technique for training the GNN 112, the transformer 118, and the taxi-time correction operator 122. The technique 200 as illustrated begins at operation 220. At operation 222, it is determined whether the GNN 112 and the transformer 118 data are separate. If the data is not separate, the transformer 118 features can be preprocessed at operation 224. Preprocessing transforming features can include making categorical features, discretizing continuous data, normalizing data, or the like. At operation 226 the data can be aligned and associated with taxi time estimates. Aligning the data means temporally sequencing the data. All of the data can be associated with a known, ground truth taxi time.

If the data is separate, the GNN graphs can be constructed at operation 228. The operation 228 can include identifying nodes and defining edges between nodes. Each edge indicates a direct connection, such as a taxiway, walkway, or the like, between nodes on each end of the edge. The nodes can include airport elements, taxiway bottlenecks, or the like. At operation 230, the bottlenecks of the graph can be annotated. The operation 230 includes identification and marking of specific nodes or edges within the graph that are likely to cause delays or congestion during the taxiing process. These bottlenecks represent points in the airport's layout, such as intersections, high-traffic taxiways, or areas near gates where congestion typically occurs. By annotating these bottlenecks, the system can adjust its taxi-time estimates based on the potential for delays at these points, ensuring more accurate predictions. The annotation process essentially allows the model to account for these areas dynamically, improving the overall reliability of the taxi-time prediction.

At operation 232, the GNN 112 can be initialized. Initializing the GNN 112 include defining weights for each of the edges of the GNN 112. The weights can be time-dependent to reflect the differing impact on taxi-times at different times of day.

At operation 234, the transformer 118 can be initialized. Initializing the transformer 118 includes initializing the weights of the transformer 118. At operation 236, an output layer that provides the deviations 120 can be initialized. The operation 236 includes initializing values of the weights of the output layer. At operation 238, a training batch of data is selected. The training batch of data from operation 238 includes a set of inputs including historical data 102, weather data 104, the taxi time estimate 106, and a known taxi-time 124. At operation 240, the GNN 112 determines the graph-based taxi-time 114 and the graph data 116 based on the selected training batch of data.

At operation 242, the transformer 118 determines the taxi-time deviations 120 based on the features 110, taxi-time estimate 106, the graph data 116 (weights of edges of the graph), the graph-based taxi-time 114, or a combination thereof. At operation 244 a loss is determined based on the deviation and confidence from the transformer 118. The loss can include a mean squared error (MSE) loss, a cross entropy loss, a Huber loss, or the like. The GNN 112 and transformer 118 weights can be updated based on the loss at operation 246. Note that the weights of the GNN 112 are different from the weights of the transformer 118. The weights of the GNN 112 indicate congestion and an impact on taxi time. The weights of the transformer 118 indicate relationships between features of the features 110.

At operation 248, it is determined whether the system 100 is operating sufficiently accurate. Sufficient accuracy means a specified accuracy in predicting actual taxi time. If training needs to continue to get the system 100 to operate more accurately, the technique 200 continues at operation 238. If the training has yielded a model that is sufficiently accurate, the performance metrics of the model can be determined at operation 250. The performance metrics can include model accuracy, model speed, model memory consumption, among others. The technique 200 ends at operation 252.

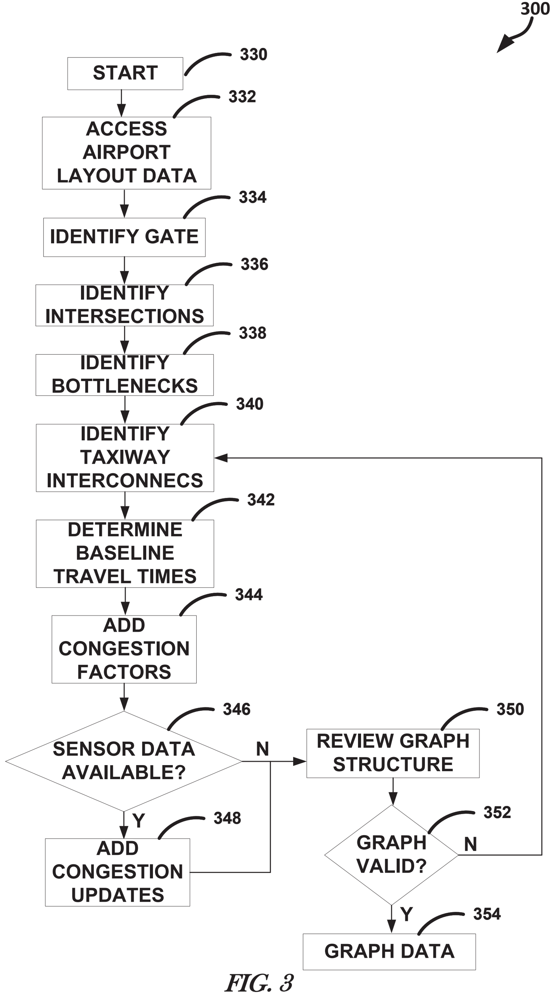

FIG. 3 illustrates, by way of example, a diagram of an embodiment of a technique 300 for generating the GNN 112. The technique 300 begins at operation 330. At operation 332, airport layout data is accessed. The layout data can include blueprints, graphical information system (GIS) data, or other historical records that indicate physical layout of the airport. At operations 334, 336, 338, 340 various nodes are identified. At operation 334, gates of the airport are identified. A gate is a location internal to the airport from which an airplane is loaded. At operation 336, taxiway interconnections are identified. Interconnections are locations at which taxiways intersect. Taxiways are typically linear and intersect each at about 90 degree angles.

At operation 338, bottlenecks are identified. A bottleneck is defined as a section (one or a combination of edges, nodes, or a combination thereof) within the taxiway network and on the graph at which traffic congestion tends to accumulate, leading to delays in taxi times. A bottleneck can occur at an intersection or an area with a higher traffic density, such as near gates, runways, or intersections of multiple taxiways. The identification of bottlenecks at operation 338 is based on historical taxi-time data and real-time traffic conditions. Specifically, bottlenecks can be detected by analyzing nodes or edges where there is a significant increase in taxi time deviations compared to other parts of the graph. These deviations may arise from congestion at intersections, delays caused by a high volume of aircraft, or areas where the taxiway network geometry restricts smooth flow. Metrics such as average waiting time at a node, traffic density, and frequency of delays at a particular segment of the taxiway network can help in identifying and defining these bottlenecks.

At operation 340, incorporates graph-based annotations that add layers of information regarding the status of items in the graph. Specifically, operation 340 assesses the items (e.g., nodes and edges) by identifying whether they serve as bottlenecks (identified in operation 338) or other critical points in the network. This step includes determining traffic flow tendencies and assessing whether congestion typically forms at these points. Thus, operation 340 represents a more advanced analysis as compared to operation 336, where the spatial relationships identified in operation 336 are evaluated in terms of congestion patterns and taxiway delays.

At operation 342, travel times between nodes are determined. The travel times can be time-dependent. The travel times inform the weights associated with the edges of the graph.

At operation 344, congestion factors are added to the edges of the graph. Congestion factors are variables that capture real-time or historical conditions that directly influence the speed or flow of taxiing airplanes along a given taxiway. These factors can include but are not limited to:

Traffic density: The number of aircraft or ground vehicles present on a particular taxiway at any given time. Higher traffic density can slow down taxi times;

Queue lengths: The length of the waiting line for takeoff or taxiing, particularly during peak hours, which can increase the congestion on certain taxiways;

Delays at gates: The time aircraft spend at the gates during loading, unloading, or other turnaround operations. Congestion at gates can ripple across the network, affecting taxiways close to the terminal area;

Surface traffic and vehicle presence: The presence of airport service vehicles (fuel trucks, catering trucks, etc.) on taxiways or runways can contribute to slower taxi speeds;

Weather conditions: Adverse weather (such as heavy rain, snow, fog, or strong winds) can affect visibility and surface conditions, causing slower taxi times for safety reasons; and

Peak and off-peak traffic patterns: Peak hours or unexpected traffic surges can generate congestion on certain taxiways, particularly during high-traffic times such as mornings or evenings.

After the congestion factors are added to the edges in the graph-based model (edges representing connections between nodes like taxiways and gates), they influence the weights assigned to those edges. For example, a heavier weight on a specific edge signifies higher congestion and results in the model predicting longer taxi times for that route. The congestion factors help adjust the predicted taxi time dynamically, reflecting real-time conditions and enabling more accurate routing and time estimation.

Whether sensor data is available, is determined at operation 346. Sensor data in this context is data related to congestion. The sensor data can include image data or data resulting from the analysis of the image data. The analysis of the image data can indicate how many vehicles are present on a given taxiway. The number of vehicles indicates whether the taxiway is congested or not.

If the sensor data is available, congestion updates can be performed on the edges of the GNN 112 at operation 348. At operation 350, the structure of the graph can be reviewed. The review at operation 350 can include identifying any unconnected nodes, taxiways with no terminus, or the like. At operation 352 it can be determined if the graph is valid. A valid graph in this context refers to a graph that accurately represents the operational layout and relationships of the airport components (e.g., gates, taxiways, runways, or the like) and does not contain any inconsistencies or errors that could distort the predictive calculations for taxi time. To determine whether a graph is valid, the system can check for several criteria:

Connectivity: A valid graph ensures that all relevant nodes (e.g., gates, taxiways, intersections) are properly connected. There should not be any disconnected nodes or isolated sections of the graph that don't link to the overall airport network.

No Unconnected or Invalid Nodes: All nodes in the graph should have a valid, operational connection. For example, a taxiway node must connect to a gate or another taxiway. If a node doesn't connect to anything (e.g., if it leads to a dead end or an invalid path), this would render the graph invalid.

Logical Pathing: The graph should reflect the real-world routes that airplanes or vehicles follow. For instance, there shouldn't be paths that are physically impossible or inefficient to traverse. Every edge must represent a valid, traversable route.

No Terminus Without Exit: A terminus without an exit (i.e., a dead-end on the taxiway where there shouldn't be one) would be a sign of an invalid graph. Each node should lead logically to another node unless it's at an appropriate end point, such as a gate or runway.

Congestion Considerations: The graph incorporates real-time congestion and operational conditions. If data relating to congestion or operational constraints (e.g., a blocked taxiway) is not factored into the graph's edges and weights, it would not be valid for real-time operations.

After these conditions are satisfied, the graph is considered valid and can be used to accurately predict taxi times and generate useful operational insights. If any of these criteria are not met, the graph needs further refinement before it can be deemed valid.

If the graph is invalid, the technique 300 can continue at operation 340. If the graph is valid, the graph data is provided as the GNN 112 graph at operation 354. The graph data from operation 354 is an instance of the graph data 116.

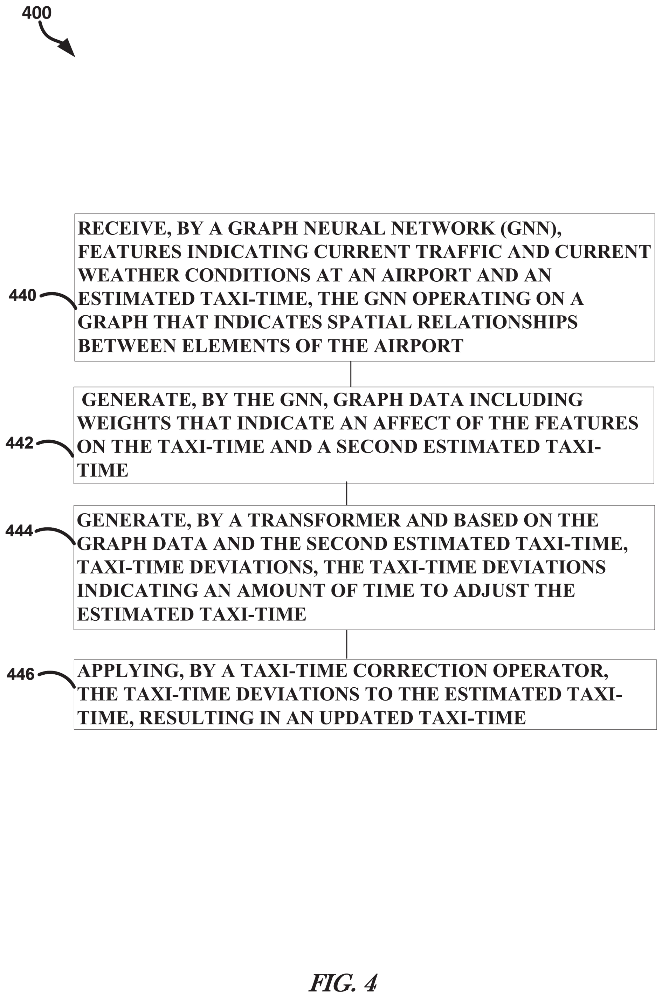

FIG. 4 illustrates, by way of example, a diagram of an embodiment of a method 400 for improved taxi-time determination. The method 400 as illustrated includes receiving, by a graph neural network (GNN), features indicating current traffic and current weather conditions at an airport and an estimated taxi-time, the GNN operating on a graph that indicates spatial relationships between elements of the airport, at operation 440; generating, by the GNN, graph data including weights that indicate an affect of the features on the taxi-time and a second estimated taxi-time, at operation 442; generating, by a transformer and based on the graph data and the second estimated taxi-time, taxi-time deviations, the taxi-time deviations indicating an amount of time to adjust the estimated taxi-time, at operation 444; and applying, by a taxi-time correction operator, the taxi-time deviations to the estimated taxi-time, resulting in an updated taxi-time, at operation 446.

The method 400 can further include adjusting airport operations based on the updated taxi-time. The features can further indicate airplane make and model of an airplane associated with the taxi-time. The estimated taxi-time can be based on historical averages of taxi-times. The current weather conditions can include wind speed and direction, precipitation, and temperature. The current traffic can include a number of vehicles present on taxiways that can be navigated by an airplane.

The method 400 can further include generating the graph based on airport layout data, wherein the graph includes gates and taxiway interconnections as nodes and edges between nodes that are directly physically traversable. The graph can further include bottlenecks as nodes. The method 400 can further include training the GNN, transformer, and taxi-time correction operator based on actual taxi-times and corresponding taxi-time estimates, corresponding weather data, and corresponding traffic data.

AI is a field concerned with developing decision-making systems to perform cognitive tasks that have traditionally required a living actor, such as a person. NNs are computational structures that are loosely modeled on biological neurons. Generally, NNs encode information (e.g., data or decision making) via weighted connections (e.g., synapses) between nodes (e.g., neurons). Modern NNs are foundational to many AI applications, such as classification, device behavior modeling (as in the present application) or the like. The encoder 108, GNN 112m transformer 118, taxi-time correction operator 122, or other component or operation can include or be implemented using one or more NNs.

Many NNs are represented as matrices of weights (sometimes called parameters) that correspond to the modeled connections. NNs operate by accepting data into a set of input neurons that often have many outgoing connections to other neurons. At each traversal between neurons, the corresponding weight modifies the input and is tested against a threshold at the destination neuron. If the weighted value exceeds the threshold, the value is again weighted, or transformed through a nonlinear function, and transmitted to another neuron further down the NN graph-if the threshold is not exceeded then, generally, the value is not transmitted to a down-graph neuron and the synaptic connection remains inactive. The process of weighting and testing continues until an output neuron is reached; the pattern and values of the output neurons constituting the result of the NN processing.

The optimal operation of most NNs relies on accurate weights. However, NN designers do not generally know which weights will work for a given application. NN designers typically choose a number of neuron layers or specific connections between layers including circular connections. A training process may be used to determine appropriate weights by selecting initial weights.

In some examples, initial weights may be randomly selected. Training data is fed into the NN, and results are compared to an objective function that provides an indication of error. The error indication is a measure of how wrong the NN's result is compared to an expected result. This error is then used to correct the weights. Over many iterations, the weights will collectively converge to encode the operational data into the NN. This process may be called an optimization of the objective function (e.g., a cost or loss function), whereby the cost or loss is minimized.

A gradient descent technique is often used to perform objective function optimization. A gradient (e.g., partial derivative) is computed with respect to layer parameters (e.g., aspects of the weight) to provide a direction, and possibly a degree, of correction, but does not result in a single correction to set the weight to a "correct" value. That is, via several iterations, the weight will move towards the "correct," or operationally useful, value. In some implementations, the amount, or step size, of movement is fixed (e.g., the same from iteration to iteration). Small step sizes tend to take a long time to converge, whereas large step sizes may oscillate around the correct value or exhibit other undesirable behavior. Variable step sizes may be attempted to provide faster convergence without the downsides of large step sizes.

Backpropagation is a technique whereby training data is fed forward through the NN-here "forward" means that the data starts at the input neurons and follows the directed graph of neuron connections until the output neurons are reached-and the objective function is applied backwards through the NN to correct the synapse weights. At each step in the backpropagation process, the result of the previous step is used to correct a weight. Thus, the result of the output neuron correction is applied to a neuron that connects to the output neuron, and so forth until the input neurons are reached. Backpropagation has become a popular technique to train a variety of NNs. Any well-known optimization algorithm for back propagation may be used, such as stochastic gradient descent (SGD), Adam, etc.

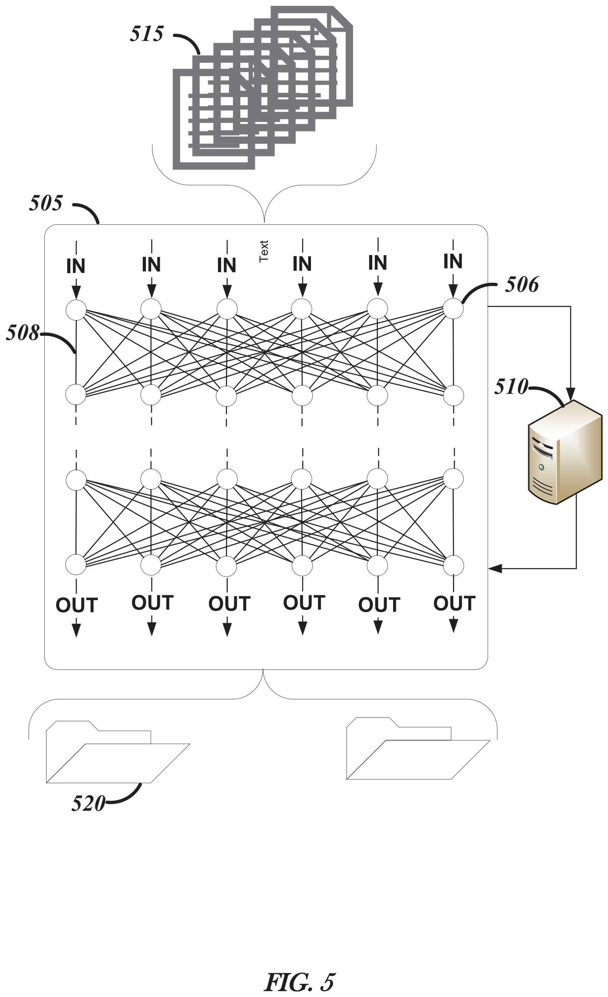

FIG. 5 is a block diagram of an example of an environment including a system for neural network (NN) training. The system includes an artificial NN (ANN) 505 that is trained using a processing node 510. The processing node 510 may be a central processing unit (CPU), graphics processing unit (GPU), field programmable gate array (FPGA), digital signal processor (DSP), application specific integrated circuit (ASIC), or other processing circuitry. In an example, multiple processing nodes may be employed to train different layers of the ANN 505, or even different nodes 506 within layers. Thus, a set of processing nodes 510 is arranged to perform the training of the ANN 505. The encoder 108, GNN 112m transformer 118, or taxi-time correction operator 122, can be trained using the system of FIG. 5.

The set of processing nodes 510 is arranged to receive a training set 515 for the ANN 505. The ANN 505 comprises a set of nodes 506 arranged in layers (illustrated as rows of nodes 506) and a set of inter-node weights 508 (e.g., parameters) between nodes in the set of nodes. In an example, the training set 515 is a subset of a complete training set. Here, the subset may enable processing nodes with limited storage resources to participate in training the ANN 505.

The training data may include multiple numerical values representative of a domain, such as an image feature, or the like. Each value of the training or input 515 to be classified after ANN 505 is trained, is provided to a corresponding node 506 in the first layer or input layer of ANN 505. The values propagate through the layers and are changed by the objective function.

As noted, the set of processing nodes is arranged to train the neural network to create a trained neural network. After the ANN is trained, data input into the ANN will produce valid classifications 520 (e.g., the input data 515 will be assigned into categories), for example. The training performed by the set of processing nodes 506 is iterative. In an example, each iteration of the training the ANN 505 is performed independently between layers of the ANN 505. Thus, two distinct layers may be processed in parallel by different members of the set of processing nodes. In an example, different layers of the ANN 505 are trained on different hardware. The members of different members of the set of processing nodes may be located in different packages, housings, computers, cloud-based resources, etc. In an example, each iteration of the training is performed independently between nodes in the set of nodes. This example is an additional parallelization whereby individual nodes 506 (e.g., neurons) are trained independently. In an example, the nodes are trained on different hardware.

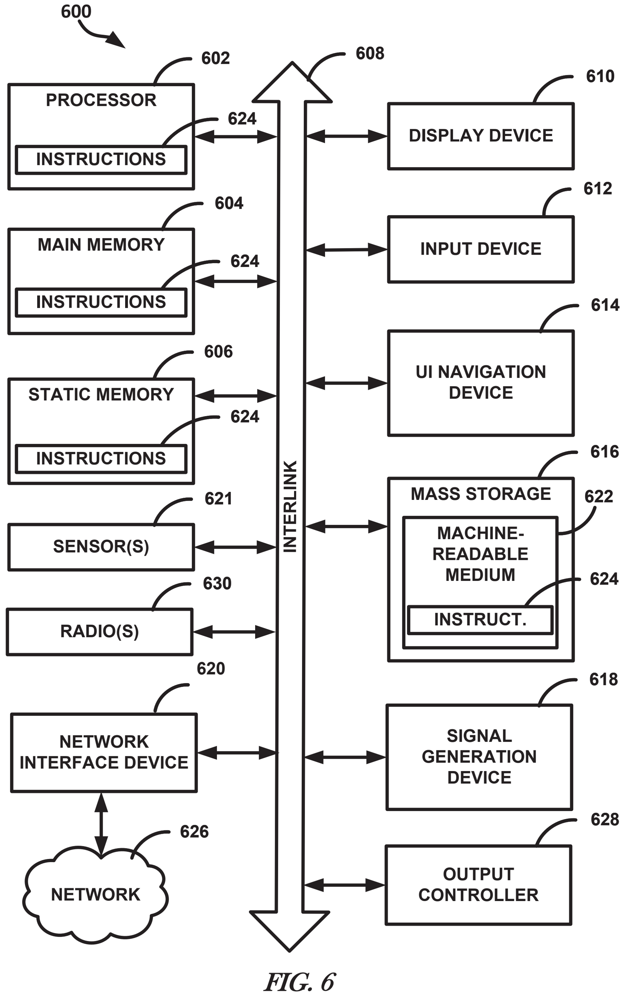

FIG. 6 illustrates, by way of example, a block diagram of an embodiment of a machine in the example form of a computer system 600 within which instructions, for causing the machine to perform any one or more of the methods or techniques discussed herein, may be executed. One or more of the encoder 108, GNN 112m transformer 118, taxi-time correction operator 122, technique 200, 300, 400, or other component, operation, or technique, can include, or be implemented or performed by one or more of the components of the computer system 600. In a networked deployment, the machine may operate in the capacity of a server or a client machine in server-client network environment, or as a peer machine in a peer-to-peer (or distributed) network environment. The machine may be a personal computer (PC), server, a tablet PC, a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a user interface (UI) navigation device 614 (e.g., a mouse), a mass storage unit 616, a signal generation device 618 (e.g., a speaker), a network interface device 620, and a radio 630 such as Bluetooth, WWAN, WLAN, and NFC, permitting the application of security controls on such protocols.

The mass storage unit 616 includes a machine-readable medium 622 on which is stored one or more sets of instructions and data structures (e.g., software) 624 embodying or utilized by any one or more of the methodologies or functions described herein. The instructions 624 may also reside, completely or at least partially, within the main memory 604 and/or within the processor 602 during execution thereof by the computer system 600, the main memory 604 and the processor 602 also constituting machine-readable media.

While the machine-readable medium 622 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding, or carrying instructions for execution by the machine and that cause the machine to perform any one or more of the methodologies of the present invention, or that is capable of storing, encoding, or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

The instructions 624 may further be transmitted or received over a communications network 626 using a transmission medium. The instructions 624 may be transmitted using the network interface device 620 and any one of a number of well-known transfer protocols (e.g., HTTPS). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of encoding, or carrying instructions for execution by the machine, and includes digital or analog communications signals or other intangible media to facilitate communication of such software.

### Additional Examples

Example 1 includes a method comprising receiving, by a graph neural network (GNN), features indicating current traffic and current weather conditions at an airport and an estimated taxi-time, the GNN operating on a graph that indicates spatial relationships between elements of the airport, generating, by the GNN, graph data including weights that indicate an effect of the features on the taxi-time and a second estimated taxi-time, generating, by a transformer and based on the graph data and the second estimated taxi-time, taxi-time deviations, the taxi-time deviations indicating an amount of time to adjust the estimated taxi-time, and applying, by a taxi-time correction operator, the taxi-time deviations to the estimated taxi-time, resulting in an updated taxi-time.

In Example 2, Example 1 further includes adjusting airport operations based on the updated taxi-time.

In Example 3, at least one of Examples 1-2 further includes, wherein the features further indicate airplane make and model of an airplane associated with the taxi-time.

In Example 4, at least one of Examples 1-3 further includes, wherein the estimated taxi-time is based on historical averages of taxi-times.

In Example 5, at least one of Examples 1-4 further includes, wherein the current weather conditions include wind speed and direction, precipitation, and temperature.

In Example 6, at least one of Examples 1-5 further includes, wherein the current traffic includes a number of vehicles present on taxiways that can be navigated by an airplane.

In Example 7, at least one of Examples 1-6 further includes generating the graph based on airport layout data, wherein the graph includes gates and taxiway interconnections as nodes and edges between nodes that are directly physically traversable.

In Example 8, Example 7 further includes, wherein the graph further include bottlenecks as nodes.

In Example 9, at least one of Examples 1-8 further includes training the GNN, transformer, and taxi-time correction operator based on actual taxi-times and corresponding taxi-time estimates, corresponding weather data, and corresponding traffic data.

Example 10 includes a graph neural network (GNN) configured to operate on a graph that indicates spatial relationships between elements of an airport, receive features indicating current traffic and current weather conditions at the airport and an estimated taxi-time, and generate graph data including weights that indicate an effect of the features on the taxi-time and a second estimated taxi-time, a neural network transformer configured to generate, based on the graph data and the second estimated taxi-time, taxi-time deviations, the taxi-time deviations indicating an amount of time to adjust the estimated taxi-time, and processing circuitry configured to apply the taxi-time deviations to the estimated taxi-time, resulting in an updated taxi-time.

In Example 11, Example 10 further includes, wherein the processing circuitry is further configured to adjust a schedule of airport operations based on the updated taxi-time.

In Example 12, at least one of Examples 10-11 further includes, wherein the features further indicate airplane make and model of an airplane associated with the taxi-time.

In Example 13, at least one of Examples 10-12 further includes, wherein the estimated taxi-time is based on historical averages of taxi-times.

In Example 14, at least one of Examples 10-13 further includes, wherein the current weather conditions include wind speed and direction, precipitation, and temperature.

In Example 15, at least one of Examples 10-14 further includes, wherein the current traffic includes a number of vehicles present on taxiways that can be navigated by an airplane.

In Example 16, at least one of Examples 10-15 further includes, wherein the processing circuitry is further configured to generate the graph based on airport layout data, wherein the graph includes gates and taxiway interconnections as nodes and edges between nodes that are directly physically traversable.

In Example 17, Example 16 further includes, wherein the graph further include bottlenecks as nodes.

In Example 18, at least one of Examples 10-17 further includes, wherein the processing circuitry is further configured to train the GNN, transformer, and application of the taxi-time deviations based on actual taxi-times and corresponding taxi-time estimates, corresponding weather data, and corresponding traffic data.

Example 19 includes a non-transitory machine-readable medium including instructions that, when executed by a machine, cause the machine to perform operations of the method of at least one of Examples 1-9.

Although teachings have been described with reference to specific example teachings, it will be evident that various modifications and changes may be made to these teachings without departing from the broader scope of the teachings. Accordingly, the specification and drawings are to be regarded in an illustrative rather than a restrictive sense. The accompanying drawings that form a part hereof, show by way of illustration, and not of limitation, specific teachings in which the subject matter may be practiced. The teachings illustrated are described in sufficient detail to enable those skilled in the art to practice the teachings disclosed herein. Other teachings may be utilized and derived therefrom, such that structural and logical substitutions and changes may be made without departing from the scope of this disclosure. This Detailed Description, therefore, is not to be taken in a limiting sense, and the scope of various teachings is defined only by the appended claims, along with the full range of equivalents to which such claims are entitled.

## Claims

1. A method comprising:
receiving, by a graph neural network, GNN (112), features indicating current traffic and current weather conditions at an airport and an estimated taxi-time, the GNN (112) operating on a graph that indicates spatial relationships between elements of the airport;
generating, by the GNN (112), graph data including weights that indicate an effect of the features on the taxi-time and a second estimated taxi-time;
generating, by a transformer and based on the graph data and the second estimated taxi-time, taxi-time deviations, the taxi-time deviations indicating an amount of time to adjust the estimated taxi-time; and
applying, by a taxi-time correction operator, the taxi-time deviations to the estimated taxi-time, resulting in an updated taxi-time.

2. The method of claim 1, further comprising adjusting airport operations based on the updated taxi-time.

3. The method of claim 1 or 2, wherein the features further indicate airplane make and model of an airplane associated with the taxi-time.

4. The method of any preceding claim, wherein the estimated taxi-time is based on historical averages of taxi-times.

5. The method of any preceding claim, wherein the current weather conditions include wind speed and direction, precipitation, and temperature; and/or wherein the current traffic includes a number of vehicles present on taxiways that can be navigated by an airplane.

6. The method of any preceding claim, further comprising generating the graph based on airport layout data, wherein the graph includes gates and taxiway interconnections as nodes and edges between nodes that are directly physically traversable, and optionally wherein the graph further include bottlenecks as nodes.

7. The method of any preceding claim, further comprising training the GNN (112), transformer, and taxi-time correction operator based on actual taxi-times and corresponding taxi-time estimates, corresponding weather data, and corresponding traffic data.

8. A system comprising:
a graph neural network, GNN (112), configured to:
operate on a graph that indicates spatial relationships between elements of an airport;
receive features indicating current traffic and current weather conditions at the airport and an estimated taxi-time; and
generate graph data including weights that indicate an effect of the features on the taxi-time and a second estimated taxi-time;
a neural network transformer configured to generate, based on the graph data and the second estimated taxi-time, taxi-time deviations, the taxi-time deviations indicating an amount of time to adjust the estimated taxi-time; and
processing circuitry configured to apply the taxi-time deviations to the estimated taxi-time, resulting in an updated taxi-time.

9. The system of claim 8, wherein the processing circuitry is further configured to adjust a schedule of airport operations based on the updated taxi-time.

10. The system of claim 8 or 9, wherein the features further indicate airplane make and model of an airplane associated with the taxi-time.

11. The system of any of claims 8-10, wherein the estimated taxi-time is based on historical averages of taxi-times; and/or wherein the current weather conditions include wind speed and direction, precipitation, and temperature; and/or wherein the current traffic includes a number of vehicles present on taxiways that can be navigated by an airplane.

12. The system of any of claims 8-11, wherein the processing circuitry is further configured to generate the graph based on airport layout data, wherein the graph includes gates and taxiway interconnections as nodes and edges between nodes that are directly physically traversable, and optionally wherein the graph further include bottlenecks as nodes.

13. The system of any of claims 8-12, wherein the processing circuitry is further configured to train the GNN (112), transformer, and application of the taxi-time deviations based on actual taxi-times and corresponding taxi-time estimates, corresponding weather data, and corresponding traffic data.

14. A non-transitory machine-readable medium including instructions that, when executed by a machine, cause the machine to perform operations for aircraft taxi-time estimation, the operations comprising:
receiving, by a graph neural network, GNN (112), features indicating current traffic and current weather conditions at an airport and an estimated taxi-time, the GNN (112) operating on a graph that indicates spatial relationships between elements of the airport;
generating, by the GNN (112), graph data including weights that indicate an effect of the features on the taxi-time and a second estimated taxi-time;
generating, by a transformer and based on the graph data and the second estimated taxi-time, taxi-time deviations, the taxi-time deviations indicating an amount of time to adjust the estimated taxi-time; and
applying, by a taxi-time correction operator, the taxi-time deviations to the estimated taxi-time, resulting in an updated taxi-time.

15. The non-transitory machine-readable medium of claim 14, wherein the operations further comprise adjusting airport operations based on the updated taxi-time.
